# EUROPEAN PATENT SPECIFICATION

(11) **EP 2 231 357 B1**
(45) Date of publication and mention of the grant of the patent: **25.04.2012**
(21) Application number: 08869520.0
(22) Date of filing: 10.12.2008
(51) Int. Cl.: B23K 9/02, B23K 9/028, B23K 33/00, B60D 1/06

(54) **WELDING METHOD FOR THE MANUFACTURE OF A REMOVABLE TOW BAR FOR PRIVATE MOTOR VEHICLES**
SCHWEISSVERFAHREN ZUR HERSTELLUNG EINER ABNEHMBAREN ANHÄNGERKUPPLUNG FÜR PKW
PROCÉDÉ DE SOUDAGE POUR LA FABRICATION D'UN ATTELAGE AMOVIBLE POUR VÉHICULES ROUTIERS

(30) Priority: 10.12.2007 NL 2001068
(43) Date of publication of application: 29.09.2010
(73) Proprietor: ACS Holding B.V., 4906 AD Oosterhout (NB) (NL)
(72) Inventor: VAN STRIEN, Adrianus Cornelis, NL-4818 TV Breda (NL)
(74) Representative: Verhees, Godefridus Josephus Maria
(86) International application number: PCT/NL2008/050790
(87) International publication number: WO 2009/088284

(56) References cited:
- EP-A- 0 736 401
- WO-A-2007/134070
- US-B1- 6 392 193
- "METALS HANDBOOK, Welding, Brazing, and Soldering" 1983, ASM, AMERICAN SOCIETY FOR METALS , OHIO 6 , XP002519792 page 175

## Description

### Field of the invention.

The present invention relates to a welding method for the manufacture of a removable tow bar for private motor vehicles, which tow bar comprises a coupling member produced as a forging, as well as a ball rod produced as a pivoting member having a free end by which the ball rod is welded to the coupling member by means of a mig welding process.

### State of the art.

Removable tow bars for private motor vehicles are generally known. They are generally built up of a metal frame or supporting structure fixedly connected to the vehicle, which supporting structure is usually found on the inside of the bumper so that it is generally hidden from view, and a removable ball bar system consisting of the removable ball bar per se and a metal receiver which is fixedly attached to the metal supporting structure by means of bolts or welds and which is intended for receiving the removable ball rod. When fitting the removable ball rod it is inserted into the receiver after which the locking operation in the receiver generally takes place automatically. When the removable ball rod is removed one generally utilizes a control knob which, when turned, causes the ball rod to be released, after which the latter can be removed from the receiver.

When ball rods are manufactured, they may be selected to be manufactured in one piece (usually a forging) or to be manufactured in two pieces (a coupling member and the ball rod), which pieces are then fastened to each other after they have been CNC processed.

The present invention relates to removable tow bars for which the coupling member and the ball rod are manufactured separately, after which they are fixedly attached to each other.

There are various ways to attach the coupling member to the ball rod. One of these ways is the mig welding process. With this welding method the end of the ball rod is connected to the coupling member by an ordinary mig weld. The strength is then the greatest problem. For this reason the end of the ball rod is often turned at a larger diameter than the ball rod per se, after which this end is flattened in order to obtain a larger connecting surface for the weld. Once the end of the ball rod has been flattened, the head end of the ball rod is no longer flat so that an additional CNC milling operation is needed to prepare the surface for the weld. Also a bevel is milled from the head end, which bevel is used as a weld gutter. In this way the desired strength can be obtained, but the method is expensive because a heavy press is needed for flattening the ball rod at the end after which the end is still to be CNC processed before the weld can be made. After this the required welding time is relatively long. Another disadvantage is that the ball rod manufactured in this way has a less fine aspect.

### Summary of the invention.

It is an object of the invention to provide a cost effective welding method which offers sufficient strength, provides a fine aspect, has a relatively short process time and requires a limited investment. To this end the welding method according to the invention is characterised in that the coupling member includes a cylindrical weld lug whose free end is kept at a distance from the free end of the ball rod, so that there is a welding gap between the two ends while the welding process is carried out with at least one stationary or substantially stationary welding gun and the relative movement of the welding gun with respect to the tow bar is caused to occur exclusively or substantially exclusively by the rotating of the tow bar and the coupling member around a horizontal axis, while the welding gap is helically welded full up to the outside surface or just above it.

It is noticed that from "METALS HANDBOOK, Welding, Brazing, and Soldering" 1983, ASM, AMERICAN SOCIETY FOR METALS, OHIO 6, XP002519792 and from US-B1-6 392 193 a method is known whereby a gap is automatically helically welded full up to the outside surface. However, this known welding method is only used for hollow tubes and not for solid bars and only create a circumferential weld.

Further, it is noticed that from EP 0 736 401 A a towing device is known of which the ball-rod is joined to the attachment element by means of a welding process. However, this document teaches that a MIG welding process is not suitable for this.

From JP 06 063 748 a method for MIG welding of round steel is known, with the features: keeping the parts at a distance, rotating the workpieces while the welding is stationary, and helically filling up the weld gap to the outside. However, this document does not teach that this welding method will be suitable for welding a ball-rod to an attachment element.

Preferably at the free end of the ball rod or weld lug is provided a spacer stop concentrically situated at the free end and held against the other free end during the welding operation.

An embodiment of the welding method according to the invention is characterised in that the other free end not carrying the spacer stop has a central cylindrical hole in which the spacer stop is inserted with a light press fit in such a way that a concentric welding gap having a desired width is developed between the two free ends. This is advantageous in that only one part needs to be connected to the welding manipulator for the welding operation, so that the welding manipulator may be of a simpler construction.

A further embodiment of the welding method according to the invention is characterised in that the diameter of the free ends of the ball rod as well as the cylindrical lug on the coupling member are smoothly increased by several millimetres over several millimetres' width. As a result, the tensile stress and compressive stress in the surface of the weld, caused by the work loads, are reduced and thus the load-taking capacity of the product is increased.

Preferably two or more stationary or substantially stationary welding guns are used for the welding process. This accelerates the welding process and also improves the distribution of the welding metal in the welding gap.

A still further embodiment of the welding method according to the invention is characterised in that through a special blowing apparatus largely surrounding the welding gap protective gas is blown into the welding gap during the welding operation. As a consequence, a better protection of the welding bath is obtained.

Again a further embodiment of the welding method according to the invention is characterised in that immediately after the welding operation the weld is machined while the tow bar is being rotated. Prefereably the weld is then machined or milled off. The removal of metal is then carried out on the still very hot (red hot) surface of the tow bar, so that a high degree of smoothness is developed as well as a fine-grained crystal structure. In this way not only a fine aspect is developed, with no longer being visible that it is a welded product, but also the fatigue strength of the product is improved by the fine-grained crystal structure that has developed in combination with the very smooth surface.

### Brief description of the drawings.

The following description relating to the appended drawings, the whole given by way of non-limiting example of the welding method according to the invention, will provide better understanding of how the invention can be realised, in which:
Fig. 1 shows the coupling member with a cylindrical lug;
Fig. 2 shows the bent ball rod;
Fig. 3 shows the position of coupling member and ball rod during the welding operation;
Fig. 4 shows the helical structure of the weld in the welding gap;
Fig. 5 shows a detail drawing of the press fit;
Fig. 6 shows a protective gas blowing apparatus partly surrounding the welding gap;
Fig. 7 shows a detail cross section of the increase of diameter;
Fig. 8a shows the tensile stress and compressive stress in a shaft with a bending load plotted against the distance to the centre line; and
Fig. 8b shows the stress distribution in a shaft in the place of the increased diameter.

### Detailed description of the drawings

The welding method according to the invention is designed for the manufacture of a removable tow bar for private motor vehicles. The tow bar comprises a coupling member 1 made as a forging and a ball rod 3 made as a pivoting member. These two members are welded together by means of a mig welding process in the way elucidated hereinafter.

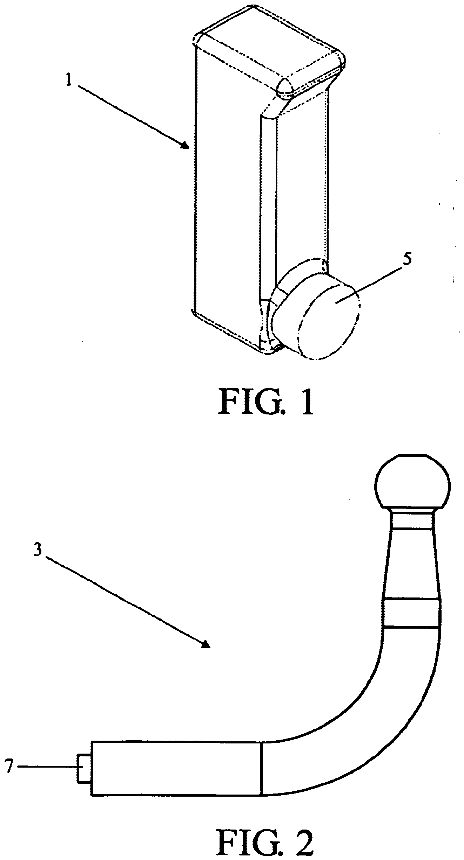

The coupling member 1 is first and foremost provided with a cylindrical lug 5 to which the ball rod is attached. The diameter of this cylindrical lug is then equal to the diameter of the end of the ball rod to be welded thereto; see Fig. 1.

Subsequently, the end of the ball rod 3 arranged as a pivoting member also has a cylindrical diameter and its head end is provided with a cylindrical and concentric spacer stop 7 which has a diameter that is about half the diameter of the end of the ball rod and has a height of about a quarter of the diameter of the ball rod. Prior to being welded, the ball rod may already have the desired bend. It is simpler for the bending process to be executed prior to the welding operation; see Fig. 2.

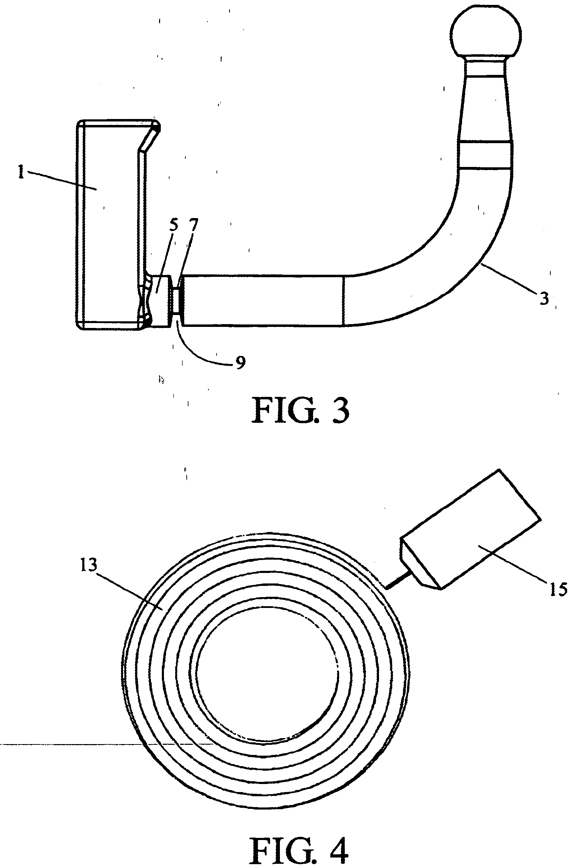

Then, in the welding method according to the invention the two members 1 and 3 described above are placed in a welding manipulator which has a horizontal axis of rotation so that the cylindrical lug 5 of the coupling member 1 abuts the spacer stop 7 at the head end of the ball rod 3, while the axis of the cylindrical lug on the coupling member coincides with the axis of the end of the ball rod; see Fig. 3. In this way a concentric welding gap 9 arises having a depth and a width which are both equal to about a quarter of the diameter of the ball rod. However, the depth and the height of the welding gap 9 need not of necessity be equal to a quarter of the diameter of the ball rod, but it will generally turn out that these values produce a good result in the welding process. The two members 1 and 3 to be united in the welding manipulator are placed such that the axis of rotation of the welding manipulator coincides with the common axis of the end of the ball rod and the lug of the coupling member. The concentric welding gap 9 is then arranged in a vertical plane.

During the welding process the product is rotated in the manipulator around a horizontal axis, which coincides with the axis of the end of the ball rod and the axis of the welded lug on the coupling member, while the welding gun 11 is stationary at a specific suitable position with respect to the position of the welding bath and gravity. Generally, in the event of a product rotating counter-clockwise, the welding gun will be positioned in the right-hand top quadrant of the concentric welding gap. This in connection with the advantageous effect of gravity on the welding bath. Welding in this way with a stationary welding gun and a rotating product will provide a helical structure of the weld in the welding gap. The welding parameters are then to be set such that a proper filling of the welding gap is effected in combination with a proper penetration into the side walls of the concentric welding gap. Fig. 4 shows the helical structure of the weld 13 in the welding gap and the position of the welding gun 15.

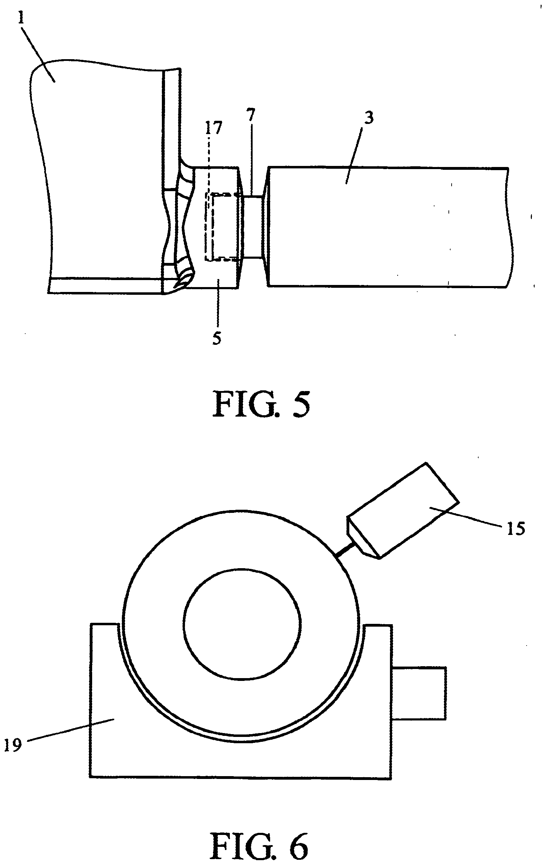

For realising an uninterrupted welding process it is necessary for the welding manipulator to have two locking claws whose axes of rotation coincide and which can rotate simultaneously with exactly the same number of revolutions per minute (angle-controlled) and in which the two members to be united can be locked. In this manner it is avoided that a mechanical joint between the two chucks interrupts the welding process during the continuous rotation. A welding manipulator of this type can be realised by using stepping motors for driving the chucks. If such a welding manipulator is not available, in a different manner it may be avoided that the welding process is interrupted, that is, by mechanically connecting, prior to the welding operation, the two members to be welded together, so that the whole product can be lifted from the welding manipulator by only one locking claw. This may be achieved by introducing in the lug 5 of the coupling member 1 a hole 17 having a slight undersize relative to the spacer stop 7 which is situated at the head end of the ball rod 3, so that the ball rod can be attached to the coupling member with a slight press fit; see Fig. 5. In this manner not more than one chuck is required to clamp down the tow bar so as to allow for uninterrupted welding.

In order to obtain proper gas protection from the welding bath in the concentric welding gap it is of importance to have the welding manipulator equipped with a special protective gas blowing apparatus 19 which largely surrounds the concentric welding gap and can thus inject the protective gas directly into the welding gap; see Fig. 6. In this manner a sufficient quantity of protective gas can stay behind in and around the concentric welding gap for an adequate corrosion protection from the welding bath and the immediate environment. This is of importance because the welding process in this case is a continuous process with much heat power concentrating in a small area. As a result, enormous heat is generated and there is a great chance of oxidation with the rotating shaft. Oxidation inclusions will negatively affect the weld strength and this is avoided in the manner described above.

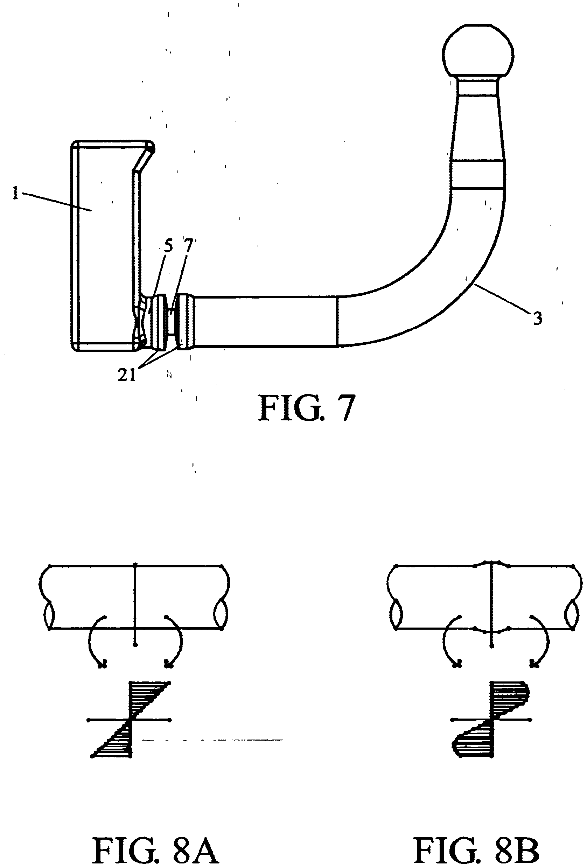

To further increase the strength of the welded joint it is advantageous to apply a slight increase of diameter 21 to the coupling member 1 at the end of the ball rod 3 and at the end of the welded lug 5 over a length of not more than several millimetres, which in a smooth fashion blends with the cylindrical part of the ball rod, or welded lug respectively, see Fig. 7, which represents a detail cross section of the increase of diameter 21. This smooth increase of diameter has two positive effects on the strength. Firstly there is an increase of bending strength as a consequence of the larger diameter (third power of the diameter) but there is yet another effect which especially plays an important part in such a mig weld, which is the fact that the weld stresses in the surface are strongly reduced by the smoothly formed edge. Fig. 8a shows the tensile stress and compressive stress with a bending load in a shaft as a function of the distance to the centre line. It is evident that the tensile stress and compressive stress are largest at the surface, whereas exactly at that location the notch-sensitiveness is greatest at the weld surface and this is disadvantageous. If the shaft at the location of the weld has a slight and smooth increase of diameter, the stress at the surface will be strongly reduced as a result of the elastic effect of the edge. The distribution of stress in the cross section with the edge is shown in Fig. 8b. The reduction of tensile stress at the surface can be seen unambiguously. The reduction of stress at the surface has a highly advantageous effect on the load-taking capacity of the weld cut since the notch sensitiveness of the weld is greatest at the surface.

To improve the appearance of the weld and also the strength of the weld the welding manipulator can be equipped with a turning or milling installation, so that the weld can be finished immediately after being formed. For this finishing operation a provision can be made for the use of the turning capacity of the manipulator itself, as a result of which this special provision can be realised in a relatively simple manner. Finish-turning the weld does not only produce a fine aspect, but also improves the strength because the notch sensitiveness will be reduced by the smoother surface.

Albeit the invention has been described in the foregoing with reference to the drawings, it should be pointed out that the invention is not by any manner or means restricted to the embodiment shown in the drawings. The invention also extends over any embodiment deviating from the embodiment shown in the drawing Figures within the scope defined by the claims. For example, the head faces at the free ends of the welded lug and the ball rod may also be slightly conically shaped in lieu of flat, so that the welding gap slightly tapers off towards the middle.

## Claims

1. A welding method for the manufacture of a removable tow bar for private motor vehicles, which tow bar comprises a coupling member (1) produced as a forging, as well as a ball rod (3) produced as a pivoting member and having a free end by which the ball rod is welded to the coupling member by means of a mig welding process, **characterised in that** the coupling member includes a cylindrical weld lug (5) whose free end is kept at a distance from the free end of the ball rod (3), so that there is a welding gap (9) between the two ends while the welding process is carried out with at least one stationary or substantially stationary welding gun (11) and the relative movement of the welding gun with respect to the tow bar is caused to occur exclusively or substantially exclusively by the rotating of the tow bar and the coupling member around a horizontal axis, while the welding gap is helically welded full up to the outside surface or just above it.

2. A welding method as claimed in claim 1, **characterised in that** at the free end of the ball rod (3) or weld lug (5) is provided a spacer stop (7) concentrically situated at the free end and held against the other free end during the welding operation.

3. A welding method as claimed in claim 2, **characterised in that** the other free end not carrying the spacer stop has a central cylindrical hole in which the spacer stop (7) is inserted with a light press fit in such a way that a concentric welding gap having a desired width is developed between the two free ends.

4. A welding method as claimed in claim 1, 2 or 3, **characterised in that** the diameter (21) of the free ends of the ball rod (3) as well as the cylindrical lug (5) on the coupling member (1) are smoothly increased by several millimetres over several millimetres' width.

5. A welding method as claimed in any one of the preceding claims, **characterised in that** through a special blowing apparatus (19) largely surrounding the welding gap protective gas is blown into the welding gap during the welding operation.

6. A welding method as claimed in any one of the preceding claims, **characterised in that** immediately after the welding operation the weld (13) is machined while the tow bar is being rotated.

## Patentansprüche

1. Schweißmethode für die Herstellung einer demontablen Anhängerkupplung für PKW, wobei die Anhängerkupplung ein als Schmiedestück hergestelltes Kuppelstück (1) sowie eine als Drehstück hergestellte Kugelstange (3) umfasst, die über ein freies Ende verfügt, mit dem die Kugelstange mittels MIG-Schweißen an das Kuppelstück geschweißt ist, **dadurch gekennzeichnet, dass** das Kuppelstück einen zylindrischen Schweißanschluss (5) aufweist, von dem das freie Ende vom freien Ende der Kugelstange (3) auf Abstand gehalten wird, sodass eine Schweißspalte (9) zwischen den beiden Enden vorhanden ist, wobei der Schweißprozess mit zumindest einer stillstehenden oder annähernd stillstehenden Schweißpistole (11) ausgeführt wird und die relative Bewegung der Schweißpistole hinsichtlich der Anhängerkupplung ausschließlich oder nahezu ausschließlich durch das Drehen der Anhängerkupplung und des Kuppelstücks um eine horizontale Achse verursacht wird, wobei die Schweißspalte bis an die Außenoberfläche oder etwas darüber hinaus spiralenförmig voll geschweißt wird.

2. Schweißmethode nach Anspruch 1, **dadurch gekennzeichnet, dass** auf dem freien Ende der Kugelstange (3) oder des Schweißanschlusses (5) eine konzentrisch an den freien Enden vorhandene Trennungszunge (7) befestigt ist, die während des Schweißens gegen das andere freie Ende gehalten wird.

3. Schweißmethode nach Anspruch 2, **dadurch gekennzeichnet, dass** das nicht mit Trennungszunge versehene andere freie Ende ein mittiges zylindrisches Loch besitzt, in das die Trennungszunge (7) mit einem leichten Pressdruck auf eine solche Art und Weise angebracht wird, dass eine konzentrische Schweißspalte mit der gewünschten Breite zwischen den beiden freien Enden entsteht.

4. Schweißmethode nach Anspruch 1, 2 oder 3, **dadurch gekennzeichnet, dass** die Durchmesser (21) der freien Enden der Kugelstange (3) und des zylindrischen Schweißanschlusses (5) auf dem Kuppelstück (1) in einer Breite von einigen mm auf fließende Weise um einige mm vergrößert sind.

5. Schweißmethode nach einem der obigen Ansprüche, **dadurch gekennzeichnet, dass** über ein spezielles Gebläse (19), das die Schweißspalte größtenteils umschließt, während des Schweißens Schutzgas in die Schweißspalte geblasen wird.

6. Schweißmethode nach einem der obigen Ansprüche, **dadurch gekennzeichnet, dass** direkt nach dem Schweißen die Schweißnaht (13) nachbearbeitet wird, während die Anhängerkupplung gedreht wird.

## Revendications

1. Méthode de soudage, pour la fabrication d'un crochet de remorque amovible pour véhicules utilitaires, lequel crochet de remorque comprend une pièce de couplage (1) fabriquée comme pièce de forge, ainsi qu'une barre à rotule (3) fabriquée comme partie pivotante, barre à rotule pourvue d'une extrémité libre au niveau de laquelle la barre à rotule est soudée à la pièce de couplage au moyen d'un procédé de soudage MIG, **caractérisée en ce que** la pièce de couplage est pourvue d'un manchon à souder (5) cylindrique dont l'extrémité libre est maintenue à distance de l'extrémité libre de la barre à rotule (3) de sorte qu'une fente de soudure (9) se trouve entre les deux extrémités, où le procédé de soudage est exécuté à l'aide d'au moins un pistolet à souder (11) immobile ou pratiquement immobile et où le mouvement relatif du pistolet à souder par rapport au crochet de remorque est dû uniquement ou pratiquement uniquement au fait que le crochet de remorque et la pièce de couplage tournent autour d'un axe horizontal, où la fente de soudure est complètement remplie, en spirale, de soudure jusqu'à la surface extérieure ou juste au-dessus.

2. Méthode de soudage selon la revendication 1, **caractérisée en ce que**, sur l'extrémité libre de la barre à rotule (3) ou du manchon à souder (5), est fixé un manchon de distance (7) concentrique présent sur les extrémités libres, lequel manchon de distance est maintenu pendant le soudage contre l'autre extrémité libre.

3. Méthode de soudage selon la revendication 2, **caractérisée en ce que** l'extrémité libre n'étant pas pourvue d'un manchon de distance est pourvue d'un trou cylindrique central dans lequel le manchon de distance (7) est appliqué par un léger ajustement avec serrage, de telle manière qu'une fente de soudure concentrique ayant la largeur désirée se forme entre les deux extrémités libres.

4. Méthode de soudage selon la revendication 1, 2 ou 3, **caractérisée en ce que** le diamètre (21) des extrémités libres de la barre à rotule (3) et du manchon cylindrique (5) étant sur la pièce de couplage (1), est augmenté, de manière fluide, de quelques millimètres sur une largeur de quelques millimètres.

5. Méthode de soudage selon une des revendications précédentes, **caractérisée en ce que** par l'intermédiaire d'un souffleur (19) spécial entourant en grande partie la fente de soudure, du gaz protecteur est soufflé pendant le soudage dans la fente de soudure.

6. Méthode de soudage selon une des revendications précédentes, **caractérisée en ce que**, directement après le soudage, la soudure (13) est parachevée pendant qu'on fait tourner le crochet de remorque.
